# EUROPEAN PATENT APPLICATION

(11) **EP 4 804 597 A1**
(43) Date of publication of application: **09.09.2026**
(21) Application number: 26160027.4
(22) Date of filing: 23.02.2026
(51) Int. Cl.: H04W 24/02, H04W 88/08, H04W 28/16, H04W 72/0446, H04W 72/0453, H04W 92/12

(54) **DYNAMIC ALLOCATION OF DISTRIBUTED UNITS IN RADIO ACCESS NETWORKS**

(30) Priority: 04.03.2025 FI 20255183
(71) Applicant: Nokia Solutions and Networks Oy, 02610 Espoo (FI)
(72) Inventor: STRAULINO, Heiko, Eurasburg (DE); TOSEEF, Umar, Sachsenheim (DE)
(74) Representative: Nokia EPO representatives

(57) **Abstract**

Techniques for facilitating dynamic allocation of Distributed Units (DUs) in a Radio Access Network (RAN) are described. In an example, a plurality of DUs corresponding to at least one network node within a RAN are identified. The plurality of DUs is usable for providing cell services and user services to facilitate communication in the RAN. Thereafter, a first set of DUs from the plurality of DUs are configured for providing the cell services. Subsequently, a second set of DUs from the plurality of DUs are configured for providing the user services.

## Description

### BACKGROUND

In the rapidly evolving landscape of the communication industry, cellular networks are tasked with handling ever growing volumes of data associated with a diverse array of user equipment. For example, a network node, such as an Evolved NodeB (eNodeB) or a Next-Generation Node B (gNodeB), is tasked with handling high data traffic volumes while maintaining high performance and reliability. Further, as the number of active users being served by a cellular network increase and the variety of telecom services being provided to such users grows, network nodes are tasked with handling even higher data traffic volumes.

A potential approach for enabling network nodes to be able to handle large data traffic volumes is to upgrade the hardware capabilities of such network nodes. Since the cellular network includes a plurality of such network nodes, enabling the network nodes to handle the high data traffic volumes by upgrading the hardware capabilities is complex and expensive. An alternative approach for enabling the network nodes to be able to handle the large data traffic volumes is to create a centralized pool of various physical/ logical units corresponding to the network nodes and allocate such physical/ logical units to one or more network nodes based on the data traffic volume being handled by the one or more network node.

### BRIEF DESCRIPTION OF DRAWINGS

Fig. 1 illustrates a Radio Access Network (RAN) for facilitating dynamic allocation of Distributed Units (DUs), in accordance with an example of the present subject matter.
Fig. 2 illustrates schematic of the CU, in accordance with an example of the present subject matter.
Fig. 3 illustrates the schematic of the CU, in accordance with another example of the present subject matter.
Figs. 4A and 4B illustrate a call flow for facilitating dynamic allocation of the DUs in the RAN, in accordance with an example of the present subject matter, in accordance with an example of the present subject matter.
Figs. 5A and 5B illustrate a call flow for facilitating dynamic allocation of DUs in the RAN, in accordance with another example of the present subject matter.
Fig. 6 illustrates a method for facilitating dynamic allocation of the DUs in the RAN, in accordance with an example of the present subject matter.
Fig. 7 illustrates a method for facilitating dynamic allocation of the DUs in the RAN, in accordance with another example of the present subject matter.
Fig. 8 illustrates a non-transitory computer-readable medium for facilitating dynamic allocation of the DUs in the RAN, in accordance with examples of the present subject matter.

Throughout the drawings, identical reference numbers designate similar, but not necessarily identical, elements. The drawings provide examples and/or implementations consistent with the description; however, the description is not limited to the examples and/or implementations provided in the drawings.

### DETAILED DESCRIPTION

Handling of data traffic at a network node includes processing and transceiving the data traffic. The act of processing the data traffic volume for transreception by the network node is referred to as baseband processing. Baseband processing at least involves modulation, demodulation, encoding, decoding, and error-correction of the data traffic that is to be transceived by the network node. Baseband processing may be handled by different physical/ logical units of the network nodes. The physical/ logical unit of network node handling the baseband processing varies based on a type of cellular network. For example, in case of a 5^{th} Generation (5G) cellular network, a gNodeB may handle baseband processing. On the other hand, in case of a Long-Term Evolution (LTE) network, an eNodeB may handle baseband processing. Further, in disaggregated Radio Access Network (RAN) deployments, the gNodeB or eNodeB may be decomposed into a Centralized Unit (CU) and at least one Distributed Unit (DU), where the CU and the at least one DU may handle the baseband processing.

In current RAN designs including the centralized pool of DUs corresponding to various network nodes, a first DU from amongst the centralized pool is coupled to one or more Radio Units (RUs) corresponding to a network node via a point-to point fronthaul interface. Such an interface, however, restricts the ability to dynamically allocate baseband processing resources to the RUs, as sharing can only occur within the confines of the first DU. Thus, such configuration restricts optimization corresponding to utilization to DUs other than the first DU available in the centralized pool, especially during periods of fluctuating traffic demand. For example, when the data traffic being handled by the radio unit is low, much of the first DU remains underutilized. Conversely, during peak traffic times at the radio unit, the first DU may become overwhelmed, while the other DUs within the centralized pool may remain idle or underutilized.

An approach to address the above-mentioned problem is to allow dynamic allocation of DUs to an RU and a corresponding network node based on the data traffic being handled by the radio unit and the network node, not just from the predetermined set of DUs but from the entire centralized pool of DUs. However, achieving such dynamic allocation is difficult owing to the constraints of the current RAN designs.

In current RAN designs, efficient operation of a radio cell and its associated UEs relies on continuous management of a range of operational states linked to the radio cell and UEs within the radio cell. For instance, in a radio cell, the DU associated with a network node corresponding to the radio cell is responsible for maintaining critical state information, such as managing Random Access Channel (RACH) transmissions, broadcasting system information, and facilitating communication with UEs. The DU is also responsible for managing a set of states related to essential operations, including transmission power control, resource allocation based on channel conditions, mobility management, Quality of Service (QoS), and transmission security. In addition to maintaining the critical state information and the management of states, the at least one DU also stores substantial amounts of buffered data that is queued for transmission for both downlink to UEs and uplink to the core Network. The states and buffers hold large amounts of data, with the operational states changing frequently, every few microseconds during each timeslot of the air interface.

Since the current RAN designs requires the DUs associated with a network node to be coupled to the RU via the point-to point interface, to transfer the responsibility of a cell's baseband processing from one DU to another, the data associated with the states and the buffers must be moved from the at least one DU to at least one other DU before baseband processing begins for a next timeslot. Since the baseband processing timeslots are usually short, reliably transferring the responsibility of the cell's baseband processing from at least one DU to at least the other DU is extremely challenging. In addition to transitioning the data, transferring the responsibility of a cell's baseband processing also includes applying the data to multiple state machines, databases, and hardware settings on the at least one other DU. Moreover, the transfer of responsibility involves notifying the RU about the change in DU and initiating a synchronization at a fronthaul network between the RU and the at least one other DU.

Attempting such a transition not only poses a technical challenge but also carries a significant risk of exceeding an associated baseband processing timeslot, leading to delays in baseband processing. Further, given that service interruptions are unacceptable in current cellular networks, even a slight delay could result in disruptive service outages for the radio cell.

According to examples of the present subject matter, techniques for facilitating dynamic allocation of Distributed Units (DUs) in a Radio Access Network (RAN) are described.

In an example of the present subject matter, a plurality of DUs corresponding to at least one network node within a RAN may be identified. The plurality of DUs is usable for providing cell services and user services to facilitate communication in the RAN. The cell services are usable to manage access requests corresponding to at least one User Equipment (UE) and the user services are usable to facilitate exchange of user data with the at least one UE.

A first set of DUs from the plurality of DUs may then be configured for providing the cell services. In an example, the first set of DUs may be configured based on characteristics of at least one radio cell corresponding to the at least one network node, such as a cell coverage area, cell type, cell shape, and Quality of Service (QoS) requirements. Thereafter, a second set of DUs from the plurality of DUs may be configured for providing the user services. In an example, the second set of DUs may be configured based on data traffic within the at least one radio cell.

The present subject matter facilitates dynamic allocation of DUs to the network nodes within the RAN by introducing a smart separation of baseband processing into the cell services and the user services. Such an architectural split addresses the current limitations of fixed association between the DUs and the corresponding RU by creating two distinct baseband processing services and hosting such services on separate sets of DUs. Thus, the architectural split reduces the fixed association between the RU and the DUs to the cell services, while enabling flexible and scalable association for the user services to match real-time data traffic requirements. In this manner, the present subject matter allows preserving essential cell operations even as the user services are redistributed across DUs to match real-time data traffic requirements.

In another example of the present subject matter, a Radio Unit (RU) of a network node within the RAN may be configured for providing the cell services in the RAN. The cell services are usable at least to manage access requests corresponding to at least one UE. In an example, the RU may be configured based on characteristics of at least one radio cell corresponding to the network node, such as a cell coverage area, cell type, cell shape, and QoS requirements. Thereafter, a set of DUs within the RAN may be identified and configured for providing user services in the RAN. In an example, the set of DUs may be configured based on data traffic within at least one radio cell being served by the network node.

By facilitating hosting of the cell services on the RU, the present subject matter ensures that critical cell-level functionalities remain uninterrupted during dynamic reassignment of the user services across the set of DUs. Such reassignment of the user services, which occur during horizontal scaling or load balancing, may cause brief disruptions in the user services. However, with cell services hosted at the RU, such disruptions do not affect the cell services, thereby ensuring stable and continuous network services.

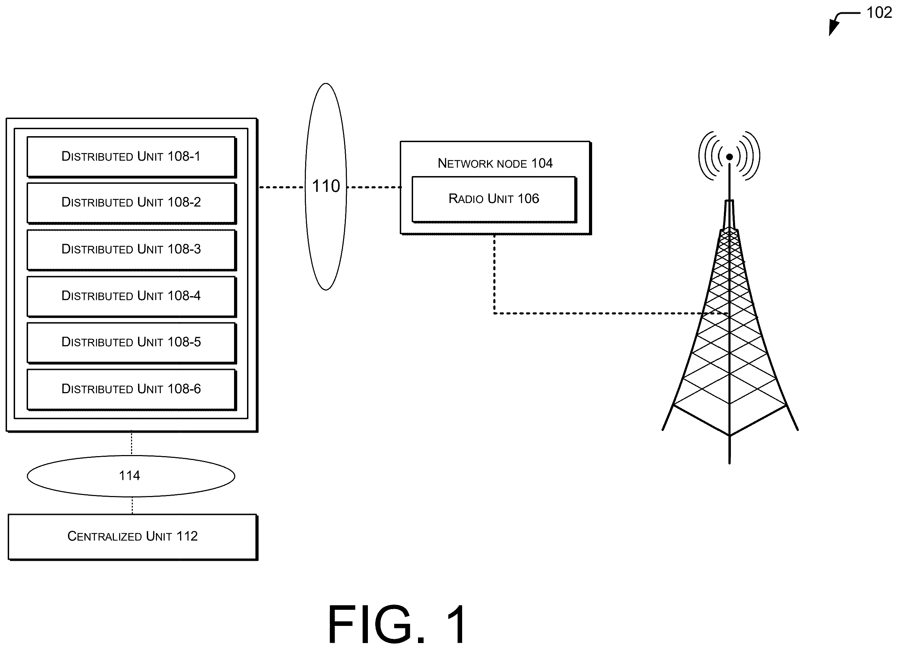

The above techniques are further described with reference to Figs. 1 to 8. It would be noted that the description and the figures merely illustrate the principles of the present subject matter along with examples described herein and would not be construed as a limitation to the present subject matter. It is thus understood that various arrangements may be devised that, although not explicitly described or shown herein, embody the principles of the present subject matter. Moreover, all statements herein reciting principles, aspects, and implementations of the present subject matter, as well as specific examples thereof, are intended to encompass equivalents thereof.

Fig. 1 illustrates a Radio Access Network (RAN) for facilitating dynamic allocation of Distributed Units (DUs), in accordance with an example of the present subject matter. Examples of RAN 102 may include, but are not limited to, Distributed RAN (D-RAN), Centralized RAN (C-RAN), Cloud C-RAN, disaggregated Cloud D-RAN, and disaggregated Cloud C-RAN.

The RAN 102 may include a network node 104. Further, examples of the network node 104 may vary based on a type of the cellular network technology. For instance, when the cellular network technology is LTE, the network node 104 may be Evolved NodeB (eNB). On the other hand, when the cellular network technology is 5G-NR, the network node may be Next Generation NodeB (gNB).

The network node 104 may comprise a Radio Unit (RU) 106. In an example, the RU 106 may facilitate transmission and reception of radio signals between the network node 104 and at least one User Equipment (UE) being served by the network node 104. In the example, the RU 106, among other functions, may handle Fast Fourier Transform (FFT) and inverse FFT (iFFT) of signals to convert the signals from time domain to frequency domain and vice versa, and Analog to Digital conversion of the signals. Further, the RU 106 may interact with one or more antennas to send and receive radio signals over the air-interface.

The RAN 102 may further comprise a plurality of Distributed Units (DUs) 108-1, 108-2, 108-3, ..., 108-6. In an example, the plurality of DUs may be associated with network node 104. In another example, the plurality of DUs may be associated with a plurality of network nodes (not shown) within the RAN 102, where the plurality of network nodes may include the network node 104. For the ease of reference, the plurality of DUs 108-1, 108-2, 108-3, ..., 108-6, have been referred to as the plurality of DUs 108, hereinafter.

In an example, the plurality of DUs 108 may be communicatively coupled to the RU 106. In the example, the plurality of DUs may be communicatively coupled to the RU 106 via a fronthaul network 110.

The RAN 102 may further comprise a Centralized Unit (CU) 112. In an example, the CU 112 may be associated with the network node 104. In the example, the CU, among other functions, may be configured to manage traffic load corresponding to the network node 104 by performing load balancing across the plurality of DUs, ensuring that the radio resources are efficiently distributed based on the current network traffic conditions at the network node 104.

Further, the CU 112 may be communicatively coupled to the plurality of DUs 108. In an example, the CU 112 may be communicatively coupled to the plurality of DUs 108 via a midhaul network 114. The plurality of DUs 108 and the CU 112, among other functions, may perform baseband processing for the network node 104.

The plurality of DUs 108 and the CU 112 may be deployed at different locations and may be deployed in different ways based on a type of RAN 102. For instance, when the RAN 102 is D-RAN, the plurality of DUs 108 and the CU 112 may be deployed at a cell site corresponding to the network node 104. In such a situation, the plurality of DUs 108 and the CU 112 may be deployed as physical units. Further, when the RAN 102 is C-RAN, the plurality of DUs 108 and the CU 112 may be deployed at a far edge of the cell site corresponding to the network node 104. In such a situation, the plurality of DUs 108 and the CU 112 may be deployed as physical units.

Furthermore, when the RAN 102 is cloud C-RAN, the plurality of DUs 108 and the CU 112 may be deployed at the far edge of the cell site. In such a situation, the plurality of DUs 108 and the CU 112 may be deployed as virtualized units. Moreover, when the RAN 102 is disaggregated cloud D-RAN, the plurality of DUs 108 may be deployed at the cell site and the CU 112 may be deployed at an edge site. In such a situation, the plurality of DUs 108 and the CU 112 may be deployed as virtualized units.

Further, when the RAN 102 is disaggregated cloud C-RAN, the plurality of DUs 108 may be deployed at the far edge site and the CU 112 may be deployed at the edge site. In such a situation, the plurality of DUs 108 and the CU 112 may be deployed as virtualized units.

In an example, the CU 112 may facilitate dynamic allocation of the plurality of DUs 108 in the RAN 102. The CU 112 may facilitate dynamic allocation of the plurality of DUs 108 in different ways.

In an example of the present subject matter, the CU 112 may identify the plurality of DUs 108 within the RAN 102. The plurality of DUs 108 may be usable for providing cell services and user services to facilitate communication in the RAN 102. The cell services may be usable at least to broadcast system information and manage access requests corresponding to at least one User Equipment (UE). Further, the user services may be usable at least to facilitate exchange of user data with the at least one UE.

The CU 112 may then configure a first set of DUs, such as DU 108-1 and 108-2, from the plurality of DUs 108, for providing the cell services. In an example, the CU 112 may identify the first set of DUs based on characteristics of at least one radio cell corresponding to the network node 104, such as a cell coverage area, cell type, cell shape, and Quality of Service (QoS) requirements.

The CU 112 may then configure a second set of DUs, such as DU 108-3, 108-4, and 108-5, from the plurality of DUs 108, for providing the user services. In an example, the CU 112 may identify the second set of DUs based on data traffic within at least one radio cell being served by the network node 104.

In another example of the present subject matter, the CU 112 may configure the RU 106 for providing the cell services. The CU 112 may then identify a set of DUs, such as DUs 108-1 and 108-2, from the plurality of DUs 108, for providing the user services. In an example, the CU 112 may identify the set of DUs based on data traffic within at least one radio cell being served by the network node 104. The CU 112 may then configure the set of DUs for providing the user services.

The manner in which the dynamic allocation of the plurality of DUs 108 is facilitated is described in further details in conjunction with the forthcoming figures.

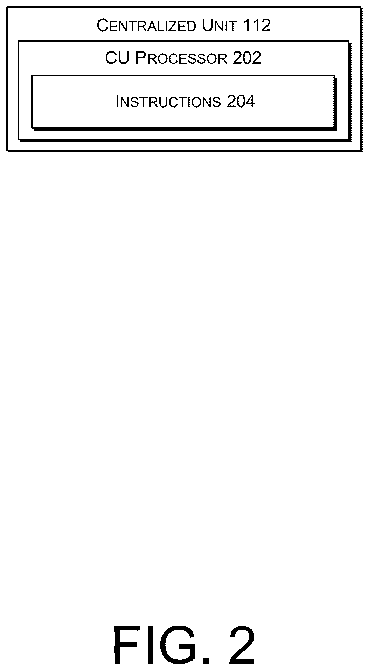

Fig. 2 illustrates schematic of the CU 112, in accordance with an example of the present subject matter.

The CU 112 may comprise a CU processor 202. The CU processor 202 may fetch and execute the computer-readable instructions 204 stored in a memory (not depicted in FIG. 2), to facilitate dynamic allocation of the plurality of DUs 108, amongst other functions.

In an example of the present subject matter, the CU processor 202 may configure a first set of DUs, such as DU 108-1 and 108-2, from the plurality of DUs 108, for providing the cell services. In an example, the CU processor 202 may identify the first set of DUs based on characteristics of at least one radio cell corresponding to the network node 104. The CU processor 202 may then configure a second set of DUs, such as DU 108-3 and 108-4, from the plurality of DUs 108, for providing the user services. In an example, the CU processor 202 may identify the second set of DUs based on data traffic within at least one radio cell being served by the network node 104.

In another example of the present subject matter, the CU processor 202 may configure the RU 106 for providing the cell services. The CU processor 202 may then identify a set of DUs, such as DU 108-1, 108-2, and 108-3, from the plurality of DUs 108, for providing the user services. In an example, the CU processor 202 may identify the set of DUs based on data traffic within at least one radio cell being served by the network node 104. The CU processor 202 may then configure the set of DUs for providing the user services.

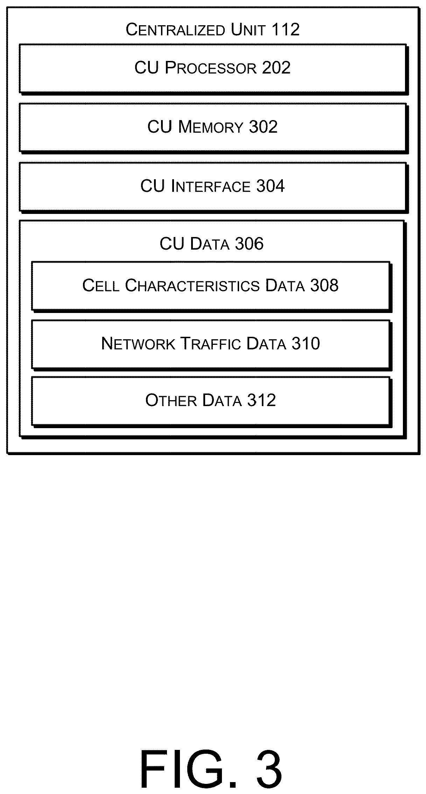

Fig. 3 illustrates the schematic of the CU 112, in accordance with another example of the present subject matter.

In an example, the CU 112 may comprise the CU processor 202, a CU memory 302, and a CU interface 304 coupled to the CU memory 302. The functions of various elements shown in the figs., including any functional blocks labelled as "CU processor", may be provided through the use of dedicated hardware as well as hardware capable of executing instructions. When provided by a processor, the functions may be provided by a single dedicated processor, by a single shared processor, or by a plurality of individual processors, some of which may be shared. Moreover, explicit use of the term "processor" would not be construed to refer exclusively to hardware capable of executing instructions, and may implicitly comprise, without limitation, digital signal processor (DSP) hardware, network processor, application specific integrated circuit (ASIC), field programmable gate array (FPGA). Other hardware, standard and/or custom, may also be coupled to the UE processor.

The CU memory 302 may be a computer-readable medium, examples of which comprise volatile memory (e.g., RAM), and/or nonvolatile memory (e.g., Erasable Programmable read-only memory, i.e., EPROM, flash memory, etc.). The CU memory 302 may be an external memory, or internal memory, such as a flash drive, a compact disk drive, an external hard disk drive, or the like. The CU memory 302 may further comprise data which either may be utilized or generated during the operation of the CU 112.

The CU interface 304 may allow the connection or coupling of the CU 112 with one or more other devices, through a wired (e.g., Local Area Network, i.e., LAN) connection or through a wireless connection (e.g., Bluetooth^{®}, WiFi). The CU interface 304 may also enable intercommunication between different logical as well as hardware components of the CU 112.

The CU 112 may further comprise CU data 306 that may be utilized or generated by the CU 112 while performing a variety of functions. In an example, the CU data 306 comprises cell characteristics data 308, network traffic data 310, and other data 312. The other data 312, amongst other things, may serve as a repository for storing data that is processed, or received, or generated as a result of the execution of the instructions by the CU processor 202. In an example, the CU data 306 may be stored in the CU memory 302.

In an example of the present subject matter, the CU processor 202 may configure the first set of DUs from the plurality of DUs 108 for providing the cell services. The cell services are usable at least to broadcast system information and manage access requests corresponding to at least one UE. The cell services may include processing of Broadcast Control Channel (BCCH), Paging Control Channel (PCCH), and Common Control Channel (CCCH) logical channels; Broadcast Channel (BCH), Random Access Channel (RACH), and Paging Channel (PCH) transport channels; and Physical Broadcast Channel (PBCH), Physical Random Access Channel (PRACH), Physical Downlink Shared Channel (PDSCH), and Physical Uplink Control Channel (PUCCH) physical layer channels. The processing requirements for the cell services scale with the number of radio cells supported by the network node 104 and are usually independent of the number of active users and data traffic within the radio cells.

In an example, the CU processor 202 may identify the first set of DUs based on characteristics of at least one radio cell corresponding to the network node 104, such as cell coverage area, cell type, cell shape, and QoS requirements.

The CU processor 202 may then configure the second set of DUs from the plurality of DUs 108 for providing the cell services. The user services are usable to facilitate exchange of user data with the at least one UE. The user services may include processing of Dedicated Control Channel (DCCH) and Dedicated Traffic Channel (DTCH) logical channels, Downlink Shared Channel (DL-SCH) and Uplink Shared Channel (UL-SCH) transport channels, and Physical Downlink Shared Channel (PDSCH) and Physical Uplink Shared Channel (PUSCH) physical layer channels.

In an example, the CU processor 202 may identify the second set of DUs based on data traffic within at least one radio cell being served by the network node 104.

In the example, when the data traffic increases across at least one radio cell being served by the network node 104, the CU processor 202 may incorporate additional DUs, such as the DU 108-5, into the second set of DUs, thereby redistributing the user services among a larger pool. Conversely, when data traffic decreases, the CU processor 202 may consolidate the user services back onto fewer DUs, thereby allowing any excess hosts to be released back into a spare resource pool. Such flexible allocation model ensures that the DUs are utilized to their fullest potential, thus preventing the underutilization that would otherwise occur when the at least one radio cell experiences partial load. As a result, the present subject matter effectively reduces Capital Expenditure (CAPEX) by increasing the number of radio cells that each DU can serve while also reducing Operating Expenditure (OPEX) by reducing energy consumption through optimized resource usage.

It would be noted that 3GPP Technical Specification (TS) 38.300 defines the basic protocol stack for baseband processing in a network node, to include Physical (PHY) layer, Medium Access Control (MAC) layer, Radio Link Control (RLC) layer, Packet Data Convergence Protocol (PDCP) layer, Service Data Adaptation Protocol (SDAP) layer for the user plane and Radio Resource Control (RRC) layer for the control plane. Further, 3GPP TS38.401 defines network node split, where the PHY layer and the MAC layer are mapped to a DU, while the RLC layer, the PDCP layer, and the RRC layer are included in a CU.

In an example, to configure the first set of DUs and the second set of DUs for providing the cell services and the user services, the CU processor 202 may split the PHY layer in PHY-CELL and PHY-UE. The CU processor 202 may then map the PHY-CELL to the first set of DUs and the PHY-UE to the second set of DUs.

The CU processor 202 may further configure a Fronthaul Multiplexing Function (FHM) in the RU 106. The CU processor 202 may configure the FHM for combining the Resource Blocks (RBs) corresponding to the cell services and the user services in a downlink direction and splitting the RBs for the cell services and the user services in an uplink direction. The downlink direction may correspond to the direction from the plurality of DUs 108 and towards the RU 106. The uplink direction may correspond to the direction from the RU 106 and towards plurality of DUs 108.

In an example, the FHM may work in an opposite direction, i.e., one RU coupled to multiple DUs, as compared to the FHM defined in Open-RANs, i.e., one DU coupled to multiple RUs. The FHM may perform splitting and combining for control plane messages and user plane messages to ensure that the messages related to same RBs are received accurately at a corresponding endpoint. In the example, the FHM may extract the transport addresses for the first set of DUs and the second set of DUs from the source addresses of fronthaul control plane messages, hence avoiding the need for explicit signaling of transport addresses of the first set of DUs and the second set of DUs.

Further, the CU processor 202 may configure a Packet Scheduler (PS) for allocating air interface resources corresponding to the network node 104 for the cell services and the user services. The CU processor 202 may configure the PS in different ways.

In an example, the CU processor 202 may configure the PS on the first set of DUs. In the example, the CU processor 202 may also configure a control interface between the first set of DUs and the second set of DUs for exchange of control information regarding allocation of the air interface resources for the cell services and the user services. The PS may perform radio resource scheduling that involves time-domain scheduling and frequency-domain scheduling. To perform the radio resource scheduling, the PS may first identify candidate Data Radio Bearers (DRBs) that are ready for transmission and list the candidate DRBs based on a corresponding priority for resource allocation. The PS may then allocate the radio resources to the prioritized DRBs.

In another example, the CU processor 202 may configure a first instance of a distributed PS on the first set of DUs for allocating the air interface resources for the cell services and the user services. The CU processor 202 may configure the first instance of the distributed PS for allocating the air interface resources in frequency domain. The CU processor 202 may further configure a second instance of the distributed PS on the second set of DUs for allocating air interface for the cell services and the user services resources. The CU processor 202 may configure the second instance of the distributed PS for allocating the air interface resources in time domain.

The CU processor 202 may also configure a control interface between the first instance of the distributed PS and the second instance of distributed PS for exchange of control information regarding allocation of the air interface resources for the cell services and the user services in the time domain and the frequency domain.

In an illustrative example, the second instance of the distributed PS may compile a list of candidate DRBs that have data ready in the buffer for transmission. The second instance of the distributed PS may then assign each DRB a scheduling priority and determine additional transmission parameters, such as the Modulation and Coding Scheme (MCS) and the number of Multiple Input Multiple Output (MIMO) layers required for transmission. When frequency-selective scheduling is in use and sub-band Channel State Information (CSI) is available, the second instance of the distributed PS may also recommend several Physical Resource Block (PRB) group allocations for optimal performance. The second instance of the distributed PS may then send DRBs' prioritized list and proposed transmission parameters to the first instance of the distributed PS through the control interface between the first instance of the distributed PS and the second instance of distributed PS.

The first instance of the distributed PS may then receive a scheduling request including the DRBs' prioritized list and proposed transmission parameters. The first instance of the distributed PS may process the scheduling request to make radio resource allocation decisions. Once allocations are finalized, the first instance of the distributed PS may relay the radio resource allocation decisions back to the second instance of the distributed PS, including details, such as the Transport Block Size (TBS), allocated PRBs, MCS, number of MIMO layers, beamforming weights, and Component Carrier (CC) number for each DRB. The first instance of the distributed PS may relay the radio resource allocation decisions through the control interface between the first instance of the distributed PS and the second instance of distributed PS.

Upon receiving the radio resource allocation decisions, the second set of DUs initiates PHE Layer-High (L1-Hi) processing that leverages local computing resources to prepare data for transmission. The output of the L1-Hi processing step is an Enhanced Common Public Radio Interface (eCPRI) stream suitable for transmission over the fronthaul network 110.

Further, the first instance of the distributed PS assigns the necessary radio resources for cell-level transmissions, such as Random Access Channel (RACH). For such transmissions, L1-Hi processing may be performed concurrently within the first set of DUs using local compute resources, resulting in generation of another eCPRI stream.

Subsequently, the FHM may multiplex the eCPRI streams generated by the first set of DUs and the second set of DUs. The FHM may then direct the combined eCPRI stream to the PHE Layer-Low (L1-Lo) processing in the RU 106 for transmission over the air interface.

In another example of the present subject matter, the CU processor 202 may configure the RU 106 for providing the cell services. The CU processor 202 may then identify a set of DUs coupled to the RU for providing the user services. In an example, the CU processor 202 may identify the set of DUs based on data traffic within at least one radio cell being served by the network node 104.

The CU processor 202 may identify the set of DUs in different ways. In an example, the CU processor 202 may identify the set of DUs from a plurality of DUs corresponding to the network node 104. In another example, the CU processor 202 may identify the set of DUs from a plurality of DUs corresponding to a plurality of network nodes within the RAN 102, where the plurality of network nodes includes the network node 104.

The CU processor 202 may then configure the set of DUs to provide the user services. In an example, the CU processor 202 may dynamically scale the set of DUs based on real-time traffic demands, thereby realizing the benefits of resource pooling. For instance, when data traffic increases across the at least one radio cell being served by the network node 104, the CU processor 202 may incorporate additional DUs, such as the DU 108-3 and 108-4, into the set of DUs, thereby redistributing the user services among a larger pool. Conversely, when data traffic decreases, the CU processor 202 may consolidate the user services back onto fewer DUs, thereby allowing any excess hosts to be released back into the spare resource pool.

It would be noted that managing cell services locally at the RU 106 reduces data traffic passing through the fronthaul network 110. Since the fronthaul network 110 is now responsible for transporting data corresponding to the user services instead of carrying all eCPRI data, overall data traffic passing through the fronthaul network 110 is reduced, thereby optimizing bandwidth usage and enhancing overall transmission efficiency within the RAN 102.

The CU processor 202 may further configure a FHM in the RU 106. The CU processor 202 may configure the FHM for combining the RBs corresponding to the cell services and the user services in a downlink direction and splitting the RBs for the cell services and the user services in an uplink direction.

Further, the CU processor 202 may configure a PS for allocating air interface resources corresponding to the network node 104 for the cell services and the user services. The CU processor 202 may configure the PS in different ways.

In an example, the CU processor 202 may configure the PS on the RU 106. In the example, the CU processor 202 may also configure a control interface between the RU 106 and the set of DUs for exchange of control information regarding allocation of the air interface resources for the cell services and the user services.

In another example, the CU processor 202 may configure a first instance of a distributed PS on the RU 106 for allocating the air interface resources for the cell services and the user services. The CU processor 202 may configure the first instance of the distributed PS for allocating the air interface resources in frequency domain. The CU processor 202 may further configure a second instance of the distributed PS on the set of DUs for allocating air interface for the cell services and the user services resources. The CU processor 202 may configure the second instance of the distributed PS for allocating the air interface resources in time domain.

It would be noted that the scheduling functions corresponding to frequency-domain scheduling are less computationally intensive compared to the more dynamic and resource-demanding scheduling tasks associated with time-domain scheduling. Accordingly, by configuring the first instance of the distributed PS on the RU 106, the present subject matter enables the RU 106 to operate efficiently with minimal additional computational resources.

In an example, the CU processor 202 may also configure a control interface between the first instance of the distributed PS and the second instance of distributed PS for exchange of control information regarding allocation of the air interface resources for the cell services and the user services in the time domain and the frequency domain.

It would be noted that since the fronthaul network 110 is designed to carry time-sensitive data traffic, the control interface operates with minimal latency and high reliability. Since the control interface facilitates exchange of control information regarding allocation of the air interface resources for the cell services and the user services, the control interface does not carry a large volume of data. As a result, bandwidth demands associated with the control interface are low and do not significantly impact the overall capacity requirements of the fronthaul network. As a result, the present subject matter ensures that the fronthaul network 110 is enabled to prioritize the high bandwidth demands corresponding to the user services while also supporting exchange of the control information between the RU 106 and the set of DUs.

In an illustrative example, the second instance of the distributed PS configured on the set of DUs may initiate the scheduling process by compiling a list of DRBs ready for transmission. The second instance of the distributed PS may assign priorities to the DRBs and determine transmission parameters, such as MCS and MIMO layers required for transmission. When the frequency-selective scheduling is in use and the sub-band CSI is available, the second instance of the distributed PS may also recommend serveral PRB group allocations. The second instance of the distributed PS may then send DRBs' prioritized list and proposed transmission parameters to the first instance of the distributed PS through the control interface between the first instance of the distributed PS and the second instance of distributed PS.

The first instance of the distributed PS configured on the RU 106 may then receive a scheduling request including the DRBs' prioritized list and proposed transmission parameters. The first instance of the distributed PS may then process the scheduling request to make final radio resource allocation decisions. Once allocations are finalized, the first instance of the distributed PS may relay the radio resource allocation decisions back to the second instance of the distributed PS, including details, such as the Transport Block Size (TBS), allocated PRBs, MCS, number of MIMO layers, beamforming weights, and Component Carrier (CC) number for each DRB. The first instance of the distributed PS may relay the radio resource allocation decisions through the control interface between the first instance of the distributed PS and the second instance of distributed PS.

Upon receiving the radio resource allocation decisions, the second set of DUs initiates PHE Layer-High (L1-Hi) processing that leverages local computing resources to prepare data for transmission. The output of the L1-Hi processing step is an Enhanced Common Public Radio Interface (eCPRI) stream suitable for transmission over the fronthaul network 110.

Further, the first instance of the distributed PS assigns the necessary radio resources for cell-level transmissions, such as Random Access Channel (RACH). For such transmissions, L1-Hi processing may be performed concurrently within the RU 106 using local compute resources, resulting in generation of another eCPRI stream.

Subsequently, the FHM may multiplex the eCPRI streams from the set of DUs and the eCPRI stream generated on the RU 106. The FHM may then direct the combined eCPRI stream to the PHE Layer-Low (L1-Lo) processing in the RU 106 for transmission over the air interface.

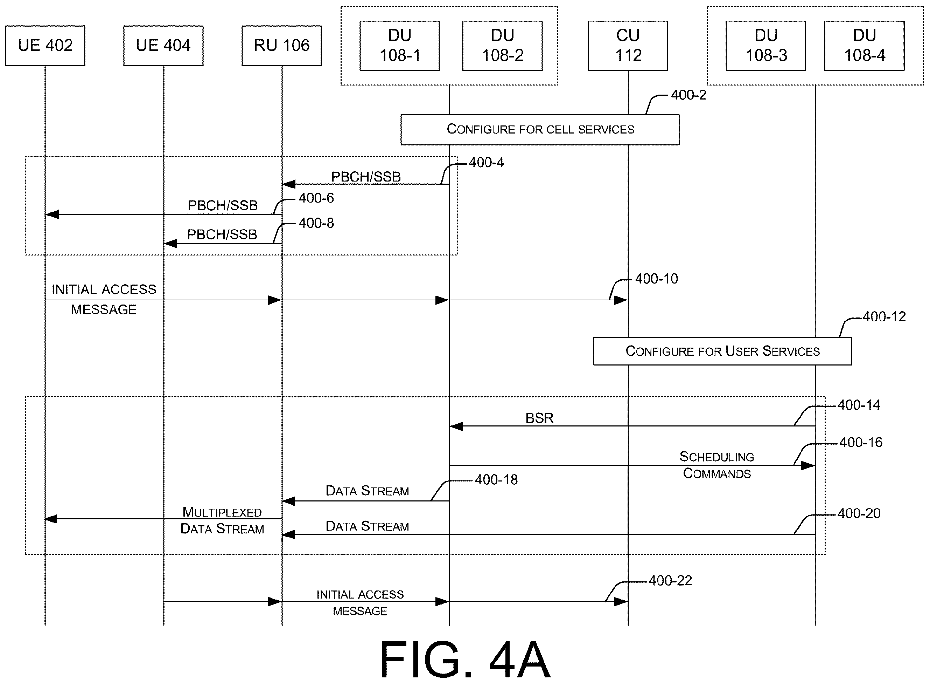

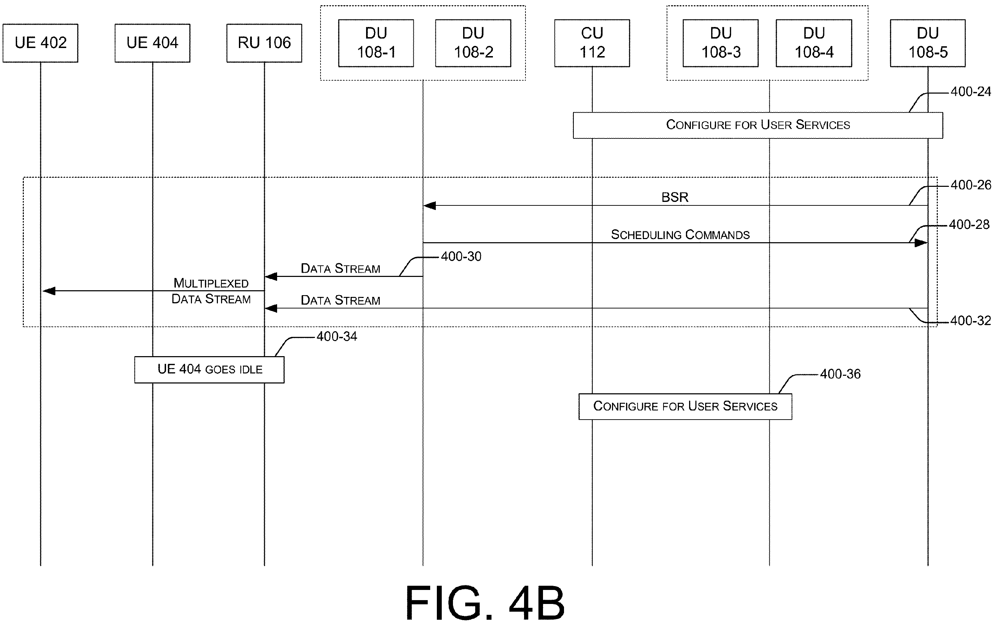

Figs. 4A and 4B illustrate a call flow for facilitating dynamic allocation of DUs in a RAN, in accordance with an example of the present subject matter.

At step 400-2, the CU 112 may configure the first set of DUs for the cell services. That is, the CU 112 may configure the first set of DUs to manage access requests corresponding to UEs 402 and 404. Upon configuration, at step 400-4, the first set of DUs may provide a Synchronization Signal Block (SSB) and a Physical Broadcast Channel (PBCH) to the RU 106. The first set of DUs may provide the SSB and the PBCH to the RU 106 for broadcasting within the radio cell corresponding to the network node. At step 400-6 and 400-8, the UEs 402 and 404 may detect the SSB and PBCH. In an example, the UEs 402 and 404 may then utilize the SSB and PBCH to establish a connection with the RU 106 over the air interface.

At step 400-10, the UE 402 may send an initial access message to the RU 106. In an example, upon receiving the initial access message, the RU 106 may forward the initial access message to the CU 112. In the example, the RU 106 may forward the initial access message to the CU 112 via the first set of DUs.

At step 400-12, upon receiving the initial access message, the CU 112 may configure the second set of DUs for providing the user services. At step 400-14, upon configuration of the second set of DUs, the second set of DUs may identify buffered data scheduled for downlink transmission and send a BSR to the first set of DUs. Subsequently, at step 400-16, the first set of DUs may perform allocation of radio resources for transmission of the buffered data and transmit scheduling commands to the second set of DUs. In an example, the first set of DUs may utilize the PS configured thereon for allocation of radio resources for transmission of the buffered data. It would be noted that while it has been described that the allocation of radio resources is performed by the PS configured on the first set of DUs, the allocation of radio resources can also be performed by the distributed packet scheduler configured on the first set of DUs and the second set of DUs.

The first set of DUs and the second set of DUs may generate different data streams for transmission. At step 400-18 and 400-20, the first set of DUs and the second set of DUs may transmit the data streams to the RU 106. In an example, the RU 106 may then transmit the data streams to the UE 402. In the example, while transmitting the data streams to the UE 402, the RU 106 may utilize the FHM configured thereon to multiplex the data streams followed by transmission of the multiplexed data stream through the air interface.

At step 400-22, the UE 404 may send an initial access message to the RU 106. In an example, upon receiving the initial access message, the RU 106 may forward the initial access message to the CU 112. In the example, the RU 106 may forward the initial access message to the CU 112 via the first set of DUs.

At step 400-24, the CU 112 may configure an additional DU, such as the DU 108-5, for providing the user services, thereby redistributing the user services among a larger pool. In an example, the CU 112 may incorporate the DU 108-5 to handle the additional data traffic associated with the UE 404.

At step 400-26, upon configuration, the DU 108-5 may identify buffered data scheduled for downlink transmission and send a BSR to the first set of DUs. Subsequently, at step 400-28, the first set of DUs may perform allocation of radio resources for transmission of the buffered data and transmit scheduling commands to the DU 108-5. In an example, the first set of DUs may utilize the PS configured thereon for allocation of radio resources for transmission of the buffered data. It would be noted that while it has been described that the allocation of radio resources is performed by the PS configured on the first set of DUs, the allocation of radio resources can also be performed by the distributed packet scheduler configured on the first set of DUs and the second set of DUs.

The first set of DUs and the DU 108-5 may generate different data streams for transmission. At step 400-30 and 400-32, the first set of DUs and the DU 108-5 may transmit the data streams to the RU 106. In an example, the RU 106 may then transmit the data streams to the UE 404. In the example, while transmitting the data streams, the RU 106 may utilize the FHM configured thereon to multiplex the data streams followed by transmission of the multiplexed data stream through the air interface.

At step 400-34, the UE 404 may go idle and stop sending data to the first set of DUs. In such a situation, the CU 112, at step 400-36, may release the DU 108-5 and configure the second set of DUs for providing the user service.

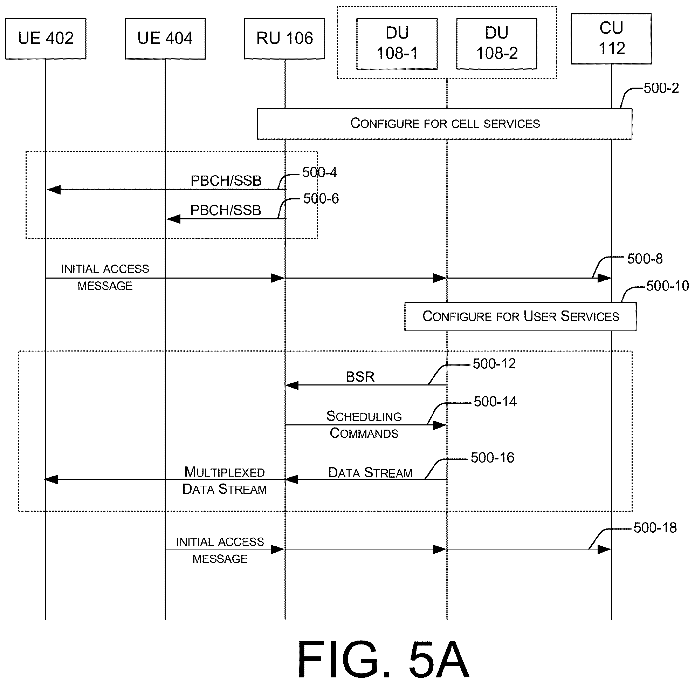

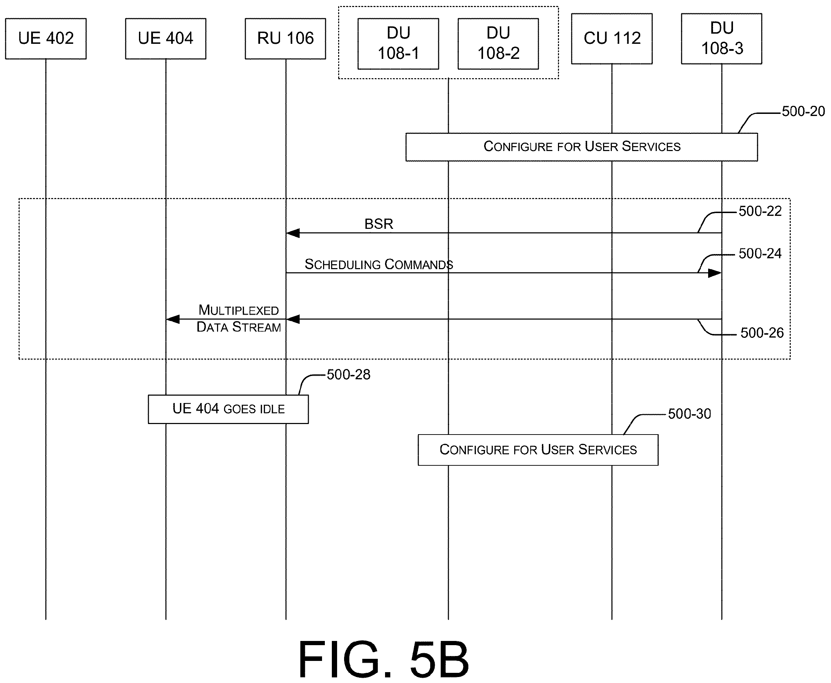

Figs. 5A and 5B illustrate a call flow for facilitating dynamic allocation of DUs in a RAN, in accordance with another example of the present subject matter.

At step 500-2, the CU 112 may configure the RU 106 for the cell services. That is, the CU 112 may configure the RU 106 to manage access requests corresponding to the UEs 402 and 404. Upon configuration, the RU 106 may broadcast a Synchronization Signal Block (SSB) and a Physical Broadcast Channel (PBCH) within the radio cell corresponding to the network node 104. At step 500-4 and 500-6, the UEs 402 and 404 may detect the SSB and PBCH. In an example, the UEs 402 and 404 may then utilize the SSB and PBCH to establish a connection with the RU 106 over the air interface.

At step 500-8, the UE 402 may send an initial access message to the RU 106. In an example, upon receiving the initial access message, the RU 106 may forward the initial access message to the CU 112. In the example, the RU 106 may forward the initial access message to the CU 112 via the set of DUs 108-1 and 108-2.

At step 500-10, upon receiving the initial access message, the CU 112 may configure the set of DUs for providing the user services. At step 500-12, upon configuration of the second set of DUs, the second set of DUs may identify buffered data scheduled for downlink transmission and send a Buffer Status Report (BSR) to the RU 106. Subsequently, at step 500-14, the RU 106 may perform allocation of radio resources for transmission of the buffered data and transmit scheduling commands to the set of DUs. In an example, the RU 106 may utilize the PS configured thereon for allocation of radio resources for transmission of the buffered data. It would be noted that while it has been described that the allocation of radio resources is performed by the PS configured on the RU 106, the allocation of radio resources can also be performed by the distributed packet scheduler configured on the RU 106 and the set of DUs.

The RU 106 and the set of DUs may generate different data streams for transmission. At step 500-16, the set of DUs may transmit the data streams to the RU 106. In an example, the RU 106 may then transmit the data stream received from the set of DUs, along with the data stream generated on the RU 106, to the UE 402. In the example, while transmitting the data streams to the UE 402, the RU 106 may utilize the FHM configured thereon to multiplex the data streams followed by transmission of the multiplexed data stream through the air interface.

At step 500-18, the UE 404 may send an initial access message to the RU 106. In an example, upon receiving the initial access message, the RU 106 may forward the initial access message to the CU 112. In the example, the RU 106 may forward the initial access message to the CU 112 via the set of DUs.

At step 500-20, the CU 112 may configure an additional DU, such as the DU 108-3, for providing the user services, thereby redistributing the user services among a larger pool. In an example, the CU 112 may incorporate the DU 108-3 to handle the additional data traffic associated with the UE 404.

At step 500-22, upon configuration, the DU 108-3 may identify buffered data scheduled for downlink transmission and send a BSR to the RU 106. Subsequently, at step 500-24, the RU 106 may perform allocation of radio resources for transmission of the buffered data and transmit scheduling commands to the DU 108-3. In an example, the RU 106 may utilize the PS configured thereon for allocation of radio resources for transmission of the buffered data. It would be noted that while it has been described that the allocation of radio resources is performed by the PS configured on the first set of DUs, the allocation of radio resources can also be performed by the distributed packet scheduler configured on the RU 106 and the set of DUs.

The RU 106 and the DU 108-5 may generate different data streams for transmission. At step 500-16, the set of DUs may transmit the data streams to the RU 106. In an example, the RU 106 may then transmit the data stream received from the set of DUs, along with the data stream generated on the RU 106, to the UE 404. In the example, while transmitting the data streams to the UE 404, the RU 106 may utilize the FHM configured thereon to multiplex the data streams followed by transmission of the multiplexed data stream through the air interface.

At step 500-28, the UE 404 may go idle and stop sending data to RU 106. In such a situation, the CU 112, at step 500-30, may release the DU 108-5 and configure the set of DUs for providing the user service.

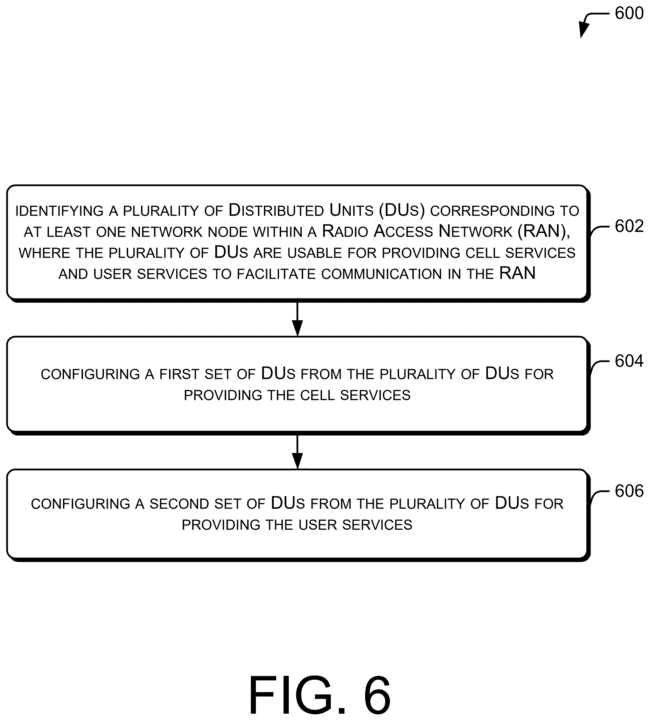

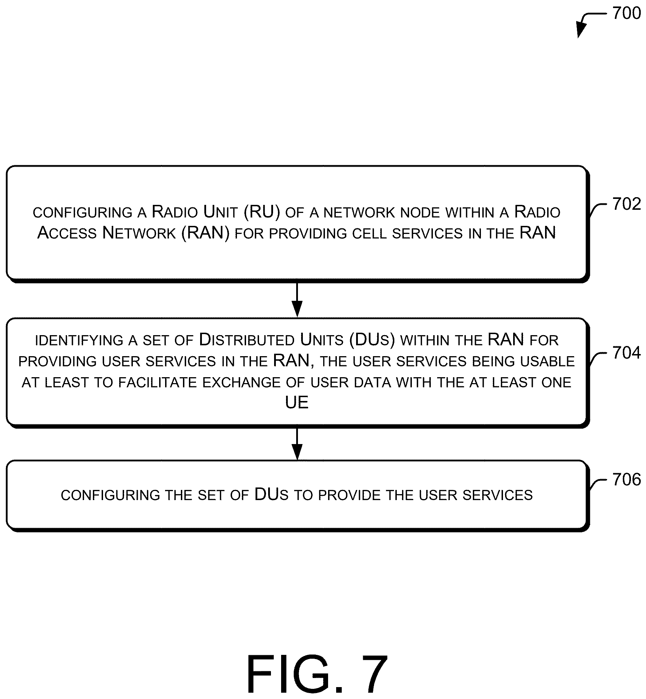

Figs. 6 and 7 illustrate methods 600 and 700 for facilitating dynamic allocation of DUs in a RAN, in accordance with examples of the present subject matter. Although the methods 600 and 700 may be implemented in a variety of devices, for the ease of explanation, the description of the methods 600 and 700 is provided in reference to the above-described CU 112. The order in which the methods 600 and 700 are described is not intended to be construed as a limitation, and any number of the described method blocks may be combined in any order to implement the methods 600 and 700, or an alternative method.

It may be understood that blocks of the methods 600 and 700 may be performed in the CU 112. The blocks of the methods 600 and 700 may be executed based on instructions stored in a non-transitory computer-readable medium, as will be readily understood. The non-transitory computer-readable medium may comprise, for example, digital memories, magnetic storage media, such as magnetic disks and magnetic tapes, hard drives, or optically readable digital data storage media.

At block 602, a plurality of DUs corresponding to at least one network node within the RAN may be identified. The plurality of DUs may be usable for providing cell services and user services to facilitate communication in the RAN.

At block 604, a first set of DUs from the plurality of DUs may be configured for providing the cell services. The cell services may be usable at least to manage access requests corresponding to at least one User Equipment (UE).

In an example, configuring the first set of DUs may include configuring a PS on the first set of DUs for allocating air interface resources for the cell services and the user services. In the example, the method may further include configuring a control interface between the first set of DUs and the second set of DUs for exchange of control information regarding allocation of the air interface resources for the cell services and the user services.

In another example, configuring the first set of DUs may include configuring a first instance of a distributed PS on the first set of DUs for allocating air interface resources for the cell services and the user services in frequency domain and configuring a second instance of the distributed PS on the second set of DUs for allocating air interface for the cell services and the user services resources in time domain. In the example, the method may further include configuring a control interface between the first instance of the distributed PS and the second instance of distributed PS for exchange of control information regarding allocation of the air interface resources for the cell services and the user services in the time domain and the frequency domain.

At block 606, a second set of DUs from the plurality of DUs may be configured for providing the user services. The user services may be usable at least to facilitate exchange of user data with the at least one UE.

In an example, the method may further include configuring a FHM on a RU coupled to the first plurality of DUs. The FHM may be configured for combining the RBs corresponding to the cell services and the user services in a downlink direction and splitting the RBs for the cell services and the user services in an uplink direction.

In fig. 7, at block 702, a RU of a network node within the RAN may be configured for providing cell services. The cell services may be usable at least to manage access requests corresponding to at least one User Equipment (UE).

In an example, configuring the RU may include configuring a PS on the RU for allocating air interface resources for the cell services and the user services. In the example, the method may further include configuring a control interface between the RU and the set of DUs for exchange of control information regarding allocation of the air interface resources for the cell services and the user services.

In another example, configuring the RU may include configuring a first instance of a distributed PS on the RU for allocating air interface resources for the cell services and the user services in frequency domain and configuring a second instance of the distributed PS on the set of DUs for allocating air interface for the cell services and the user services resources in time domain. In the example, the method may further include configuring a control interface between the first instance of the distributed PS and the second instance of distributed PS for exchange of control information regarding allocation of the air interface resources for the cell services and the user services in the time domain and the frequency domain.

In yet another example, configuring the RU may include configuring a FHM on the RU for FHM may be configured for combining Resource Blocks (RBs) corresponding to the cell services and the user services in a downlink direction and splitting the RBs corresponding to the cell services and the user services in an uplink direction.

At block 704, a set of DUs within the RAN may be identified for providing user services in the RAN. The user services may be usable at least to facilitate exchange of user data with the at least one UE. In an example, the set of DUs is identified from a plurality of DUs corresponding to the network node. In another example, the set of DUs may be identified from a plurality of DUs corresponding to a plurality of network nodes, including the network node, within the RAN.

At block 706, the set of DUs may be configured to provide the user services.

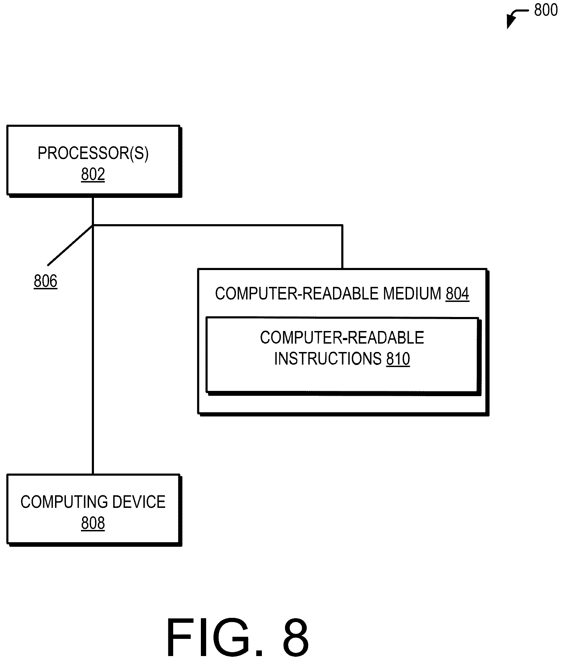

Fig. 8 illustrates a non-transitory computer-readable medium for facilitating dynamic allocation of DUs in a RAN, in accordance with examples of the present subject matter.

In an example, the computing environment 800 comprises processor 802 communicatively coupled to a non-transitory computer readable medium 804 through communication link 806. In an example, the computing environment 800 may be for example, the CU 112. In an example, the processor 802 may have one or more processing resources for fetching and executing computer-readable instructions from the non-transitory computer readable medium 804. The processor 802 and the non-transitory computer readable medium 804 may be implemented, for example, in the CU 112.

The non-transitory computer readable medium 804 may be, for example, an internal memory device or an external memory. In an example, the communication link 806 may be a network communication link, or other communication links, such as a PCI (Peripheral component interconnect) Express, USB-C (Universal Serial Bus Type-C) interfaces, 12C (Inter-Integrated Circuit) interfaces, etc. In an example, the non-transitory computer readable medium 804 comprises a set of computer readable instructions 810 which may be accessed by the processor 802 through the communication link 806 and subsequently executed for facilitating dynamic allocation of the DUs in the RAN. The processor(s) 802 and the non-transitory computer readable medium 804 may also be communicatively coupled to a computing device 808 over the network.

Referring to Fig. 8, in an example, the non-transitory computer readable medium 804 comprises computer readable instructions 810 that cause the processor 802 to identify a plurality of DUs corresponding to at least one network node within a RAN. The plurality of DUs is usable for providing cell services and user services to facilitate communication in the RAN. The cell services are usable at least to manage access requests corresponding to at least one User Equipment (UE) and the user services are usable at least to facilitate exchange of user data with the at least one UE.

The computer readable instructions 810 may then cause the processor 802 to configure a first set of DUs from the plurality of DUs for providing the cell services. The computer readable instructions 810 may cause the processor 802 to configure the first set of DUs based on based on characteristics of at least one radio cell corresponding to a network node within the RAN, such as cell coverage area, cell type, cell shape, and QoS requirements.

The computer readable instructions 810 may then cause the processor 802 to configure a second set of DUs from the plurality of DUs for providing the user services. The computer readable instructions 810 may cause the processor 802 to configure the second set of DUs based on data traffic within the at least one radio cell.

In another example, the non-transitory computer readable medium 804 comprises computer readable instructions 810 that cause the processor 802 to configure a RU of a network node within the RAN for providing cell services in the RAN.

The computer readable instructions 810 may then cause the processor 802 to identify a set of DUs within the RAN for providing user services in the RAN. In an example, the computer readable instructions 810 may cause the processor 802 to identify the set of DUs based on data traffic within at least one radio cell corresponding to the network node.

Subsequently, the computer readable instructions 810 may cause the processor 802 to configure the set of DUs to provide the user services.

Although examples of the present subject matter have been described in language specific to methods and/or structural features, it is to be understood that the present subject matter is not limited to the specific methods or features described. Rather, the methods and specific features are disclosed and explained as examples of the present subject matter.

## Claims

1. A method (600) comprising:
identifying (602) a plurality of Distributed Units (DUs) corresponding to at least one network node within a Radio Access Network (RAN), the plurality of DUs being usable for providing cell services and user services to facilitate communication in the RAN, the cell services being usable at least to broadcast system information and manage access requests corresponding to at least one User Equipment (UE) and the user services being usable at least to facilitate exchange of user data with the at least one UE;
configuring (604) a first set of DUs from the plurality of DUs for providing the cell services;
configuring (606) a second set of DUs from the plurality of DUs for providing the user services;
configuring a Packet Scheduler (PS) on the first set of DUs for allocating air interface resources for the cell services and the user services; and
configuring a control interface between the first set of DUs and the second set of DUs for exchange of control information regarding allocation of the air interface resources for the cell services and the user services;
wherein the RAN is a Distributed RAN (D-RAN), or a Centralized RAN (C-RAN).

2. The method (600) as claimed in claim 1, wherein the method comprises configuring a Fronthaul Multiplexing Function (FHM) in a Radio Unit (RU) coupled to the first plurality of DUs for combining Resource Blocks (RBs) corresponding to the cell services and the user services in a downlink direction and splitting the RBs for the cell services and the user services in an uplink direction.

3. The method (600) as claimed in claim 1, wherein the method comprises:
configuring a first instance of a distributed Packet Scheduler (PS) on the first set of DUs for allocating air interface resources for the cell services and the user services in frequency domain;
configuring a second instance of the distributed PS on the second set of DUs for allocating air interface for the cell services and the user services resources in time domain; and
configuring a control interface between the first instance of the distributed PS and the second instance of distributed PS for exchange of control information regarding allocation of the air interface resources for the cell services and the user services in the time domain and the frequency domain.

4. A method (700) comprising:
Configuring (702) a Radio Unit (RU) of a network node within a Radio Access Network (RAN) for providing cell services in the RAN, the cell services being usable at least to broadcast system information and manage access requests corresponding to at least one User Equipment (UE);
Identifying (704) a set of Distributed Units (DUs) within the RAN for providing user services in the RAN, the user services being usable at least to facilitate exchange of user data with the at least one UE;
configuring (706) the set of DUs to provide the user services;
configuring a Packet Scheduler (PS) on the first set of DUs for allocating air interface resources for the cell services and the user services; and
configuring a control interface between the first set of DUs and the second set of DUs for exchange of control information regarding allocation of the air interface resources for the cell services and the user services;
wherein the RAN is a Distributed RAN (D-RAN), or a Centralized RAN (C-RAN).

5. The method (700) as claimed in claim 4, wherein the set of DUs is identified from a plurality of DUs corresponding to a plurality of network nodes within the RAN.

6. The method (700) as claimed in claim 4, wherein the set of DUs is identified from a plurality of DUs corresponding to the network node.

7. The method (700) as claimed in claim 4, wherein the method comprises configuring a Fronthaul Multiplexing Function (FHM) in the RU for combining Resource Blocks (RBs) corresponding to the cell services and the user services in a downlink direction and splitting the RBs corresponding to the cell services and the user services in an uplink direction.

8. The method (700) as claimed in claim 4, wherein the method comprises:
configuring a first instance of a distributed Packet Scheduler (PS) on the RU for allocating air interface resources for the cell services and the user services in frequency domain;
configuring a second instance of a distributed Packet Scheduler (PS) on the set of DUs for allocating air interface resources for the cell services and the user services in time domain; and
configuring a control interface between the first instance of the distributed PS and the second instance of distributed PS for exchange of control information regarding allocation of the air interface resources for the cell services and the user services in the time domain and the frequency domain.

9. An apparatus (800) comprising:
at least one processor (802) and at least one memory storing instructions that, when executed by the at least one processor, cause the apparatus at least to:
identify a plurality of Distributed Units (DUs) corresponding to at least one network node within a Radio Access Network (RAN), the plurality of DUs being usable for providing cell services and user services to facilitate communication in the RAN, the cell services being usable at least to broadcast system information and manage access requests corresponding to at least one User Equipment (UE) and the user services being usable at least to facilitate exchange of user data with the at least one UE;
configure a first set of DUs from the plurality of DUs for providing the cell services;
configure a second set of DUs from the plurality of DUs for providing the user services;
configure a Packet Scheduler (PS) on the first set of DUs for allocating air interface resources for the cell services and the user services; and configure a control interface between the first set of DUs and the second set of DUs for exchange of control information regarding allocation of the air interface resources for the cell services and the user services;
wherein the RAN is a Distributed RAN (D-RAN), or a Centralized RAN (C-RAN).

10. The apparatus (800) as claimed in claim 9, wherein the at least one processor (802) causes the apparatus to configure a Fronthaul Multiplexing Function (FHM) in a Radio Unit (RU) coupled to the first plurality of DUs for combining Resource Blocks (RBs) corresponding to the cell services and user services in a downlink direction and splitting the RBs for cell services and user services in an uplink direction.

11. The apparatus (800) as claimed in claim 9, wherein the at least one processor (802) causes the apparatus to:
configure a first instance of a distributed Packet Scheduler (PS) on the first set of DUs for allocating air interface resources for the cell services and the user services in frequency domain;
configure a second instance of a distributed PS on the second set of DUs for allocating air interface for the cell services and the user services resources in time domain; and
configure a control interface between the first instance of the distributed PS and the second instance of distributed PS for exchange of control information regarding allocation of the air interface resources for the cell services and the user services in the time domain and the frequency domain.

12. An apparatus (800) comprising:
at least one processor (802) and at least one memory storing instructions that, when executed by the at least one processor, cause the apparatus at least to:
configure a Radio Unit (RU) of a network node within a Radio Access Network (RAN) for providing cell services in the RAN, the cell services being usable at least to broadcast system information and manage access requests corresponding to at least one User Equipment (UE);
identify a set of Distributed Units (DUs) within the RAN for providing user services in the RAN, the user services being usable at least to facilitate exchange of user data with the at least one UE;
configure the set of DUs to provide the user services; configure a Packet Scheduler (PS) on the first set of DUs for allocating air interface resources for the cell services and the user services; and
configure a control interface between the first set of DUs and the second set of DUs for exchange of control information regarding allocation of the air interface resources for the cell services and the user services;
wherein the RAN is a Distributed RAN (D-RAN), or a Centralized RAN (C-RAN).

13. The apparatus (800) as claimed in claim 12, wherein the at least one processor (802) causes the apparatus to identify the set of DUs from a plurality of DUs corresponding to a plurality of network nodes within the RAN.

14. The apparatus (800) as claimed in claim 12, wherein the at least one processor (802) causes the apparatus to identify the set of DUs from a plurality of DUs corresponding to the network node.

15. The apparatus (800) as claimed in claim 12, wherein the at least one processor (802) causes the apparatus to configure a Fronthaul Multiplexing Function (FHM) in the RU for combining Resource Blocks (RBs) corresponding to the cell services and the user services in a downlink direction and splitting the RBs corresponding to the cell services and the user services in an uplink direction.

16. The apparatus (800) as claimed in claim 12, wherein the at least one processor (802) causes the apparatus to:
configure a first instance of a distributed Packet Scheduler (PS) on the RU for allocating air interface resources for the cell services and the user services in frequency domain;
configure a second instance of a distributed Packet Scheduler (PS) on the set of DUs for allocating air interface resources for the cell services and the user services in time domain; and
configure a control interface between the first instance of the distributed PS and the second instance of distributed PS for exchange of control information regarding allocation of the air interface resources for the cell services and the user services in the time domain and the frequency domain.
